# EUROPEAN PATENT SPECIFICATION

(11) **EP 0 611 502 B1**
(45) Date of publication and mention of the grant of the patent: **12.05.1999**
(21) Application number: 93917815.8
(22) Date of filing: 13.08.1993
(51) Int. Cl.: H04B 7/24, H04L 12/56, H04Q 7/22

(54) **PACKET DATA TRANSFER IN A CELLULAR RADIO SYSTEM**
ÜBERTRAGUNG VON DATENPAKETEN IN EINER ZELLULAREN FUNKANORDNUNG
TRANSFERT DE DONNEES PAR PAQUETS DANS UN SYSTEME DE RADIOCOMMUNICATIONS CELLULAIRE

(30) Priority: 14.08.1992 FI 923669
(43) Date of publication of application: 24.08.1994
(73) Proprietor: NOKIA TELECOMMUNICATIONS OY, 02150 Espoo (FI)
(72) Inventor: POHJAKALLIO, Pekka, FIN-02100 Espoo (FI)
(74) Representative: Tomlinson, Kerry John
(86) International application number: FI9300321
(87) International publication number: WO9405095

(56) References cited:
- EP-A- 0 332 818
- EP-A- 0 332 825
- EP-A- 0 522 636

## Description

### Field of the Invention

The invention relates to packet data transfer in a digital cellular radio system.

### Background of the Invention

Advanced digital cellular systems typically offer a circuit-switched data channel for data applications. As is well-known, circuit-switched connections are very heavy to establish. In addition, at least one traffic channel of the system capacity has to be allocated to the circuit-switched connection until the connection is released. For these reasons, circuit-switched data connections are suitable mainly for applications which continuously require a transfer capacity of one transfer channel of the system for relatively long periods of time. Allocation of a circuit-switched channel for the transfer is a typical example of applications suitable for the system.

Many data applications involve a low, randomly occurring transfer demand and a need to keep the (virtual) transfer connection open continuously. A circuit-switched connection is not suitable for such purposes as the resources of the cellular system are reserved unreasonably, and the implementation of a service would therefore become too expensive.

Advanced digital cellular systems also comprise a short message service. A short message may be used in data services for the transfer of small amounts of data. In the GSM system, for instance, sending a short message is similar to a conventional call set-up procedure, i.e. it is a very heavy signalling event. The applicability of short messages in the establishment of economical data connections is therefore limited.

There are prior art packet-switched radio systems implemented for data applications. Such systems require separate network investments for data connections. As the modern cellular systems as such comprise functions useful for data applications, it is advantageous to aim at utilizing these functions in providing economical data connections.

EP-A-0332818 discloses a packet-switched cellular system comprising a cellular switch and base sites for providing packet-switched data services to cellular mobile stations. Base sites are coupled to the cellular switch by T1 span lines which are coupled to the landline telephone network. All the slots in the span lines are clear channels containing no trunk signalling information, one time slot in each direction being dedicated for common channel signalling. Multiple data calls are assigned to each packet-mode radio channel to conserve the radio channel spectrum.

EP-A-0332825 discloses a cellular data telephone system including a data control unit and a buffer for storing transmit data from a data terminal. In an ongoing cellular telephone call, if the data terminal is inactive for a predetermined time interval, the data control unit disconnects the cellular call while maintaining the landline call to a data host. The data control unit places another cellular call and reconnects the landline call thereto, once data transmission recommences.

### Disclosure of the Invention

An object of the present invention is to solve the above-described problem by providing a new packet transfer solution which is adapted for a digital cellular system and which offers data connections considerably more economical than the prior art cellular network services.

One concept of the invention is a method for the transfer of user data in packet format in a digital cellular radio system comprising base stations for radio communication with mobile radio stations, each one of the base stations comprising at least one organization channel shared by all of the mobile radio stations for sending pages from the base station to the mobile stations, for sending connection requests from the mobile stations to the base station, and for sending channel assignments to the mobile stations so as to establish an actual connection on another channel. The method according to the invention is characterized by generating modified paging messages which will not result in a normal connection establishment; adding user data in packet format to said modified messages; and sending said modified messages on the organization channel interleaved with normal paging messages.

Another concept of the invention is a mobile station for a digital cellular radio system comprising base stations for radio communication with mobile radio stations, each one of the base stations comprising at least one organization channel shared by all of the mobile radio stations for sending pages from the base station to the mobile stations, for sending connection requests from the mobile stations to the base station, and for sending channel assignments to the mobile stations so as to establish an actual connection on another channel. The mobile station according to the invention is characterized in that the mobile station comprises means for receiving user data in packet format from the base station in modified paging messages which are sent on the organization channel interleaved with normal paging messages but will not result in a normal connection establishment.

In the cellular radio system, the fixed network typically sends via the base station a connection establishment request provided with a mobile identity on a special organization channel (such as a control channel) when a connection is to be established with a specific mobile station. The establishment of an actual speech or data connection is then attempted. Correspondingly, when a mobile station wants to establish a connection, it sends a connection establishment request on one of the organization channels of the cellular radio system, as a result of which the system allocates the mobile station a dedicated call-specific channel on which actual signalling takes place. All mobile stations within a specific base station site (cell) use and listen to the same common organization channel(s). Organization channels are never allocated as circuit-switched connections as only control signalling required to establish a circuit-switched connection takes place on the organization channels.

The inventive transfer of user data in packet format is based on existing connection establishment procedures, which are applied on the organization channel(s) reserved for the connection establishment requests of the cellular radio system. Data transfer thus needs no circuit-switched connection but the data to be transferred is interleaved with the standard messages.

In the invention, the message utilized for the packet transfer is obtained by modifying a standard paging message by changing a message type (in an appropriate field) and adding a data field. The basic format of the packet message is thus similar to that of a standard paging message, and the mobile station is able to receive and process the message in the same way as the paging message is received and processed. This allows the invention to be embodied with only a few minor modifications in the mobile station and in the network. The mobile identity enables the mobile station to identify a message addressed to it, whereafter the message type identifier indicates whether the received message is a packet message or a normal paging message. The mobile station remains continuously accessible to the conventional cellular network services while it is all the time ready to receive packet data. The other mobile stations which do not use the packet transfer are not aware of the packet transfer as they follow only pages addressed to them. Accordingly, the packet transfer according to the invention is compatible with the original operation of the control channel and transparent to mobile stations in the cellular network which do not use the packet transfer. In other words, the cellular radio network operates as normal except that the data transfer on the control channels provides a new way of data transfer in parallel with the previous functions. Unlike a "circuit-switched" connection, the organization channel is not allocated to the data transfer of a specific mobile station but several mobile stations may transfer data simultaneously on the channel. Besides, all normal connection establishment signalling also takes place on the same organization channels.

From the viewpoint of the system, this means that the organization channel is loaded so that there may not be enough capacity for the control signalling itself, which results in queuing or rejection of pages. This can be avoided easily by giving priority to the control signalling over the packet transfer in the down-link traffic.

To sum up, the present invention enables ordinary mobile stations within a cellular system to be provided with an additional packet transfer function realized on the organization channel of the cellular system by interleaving the data packets with the ordinary connection requests sent on the organization channel. The inventive packet transfer is non-transparent to the other mobile stations only in that the connection request collision intensity increases with the degree of load of the system. In other words, the same cellular system may support both mobile stations using the packet transfer according to the invention and mobile stations which are not aware of the packet transfer according to the invention. The packet transfer according to the invention can thus be added to a cellular network providing services without interfering with the operation of the existing mobile stations. The invention utilizes the conventional mobility management of the cellular network by sending packets addressed to the mobile stations only within the current location area of the addressed mobile station. The precise routing of the connections makes the use of the system more efficient (increases capacity).

### Brief Description of the Drawings

The invention will be described in greater detail by means of illustrating embodiments with reference to the attached drawings, in which
Figure 1 illustrates schematically a portion of a cellular radio system in which the method according to the invention is applied;
Figure 2 illustrates TDMA channel organization in different superframe configurations of 51 TDMA frames in the GSM system;
Figure 3 is a signalling diagram illustrating a normal connection establishment procedure in the GSM system;
Figure 4 illustrates a GSM Paging Request message modified for the data transfer according to the invention;
Figure 5 shows a base station configuration; and
Figure 6 shows a mobile station configuration.

### Detailed Description of the Invention

The method according to the present invention is applicable on the control channels of the digital TDMA (Time Division Multiple Access) cellular radio systems. The method is particularly advantageous when applied in the Pan-European digital mobile radio system GSM and other similar digital systems, such as DCS1800 and PCN (Personal Communication Network). In the following the preferred embodiment of the invention will be described as an application in the GSM system, to which the invention, however, is not limited.

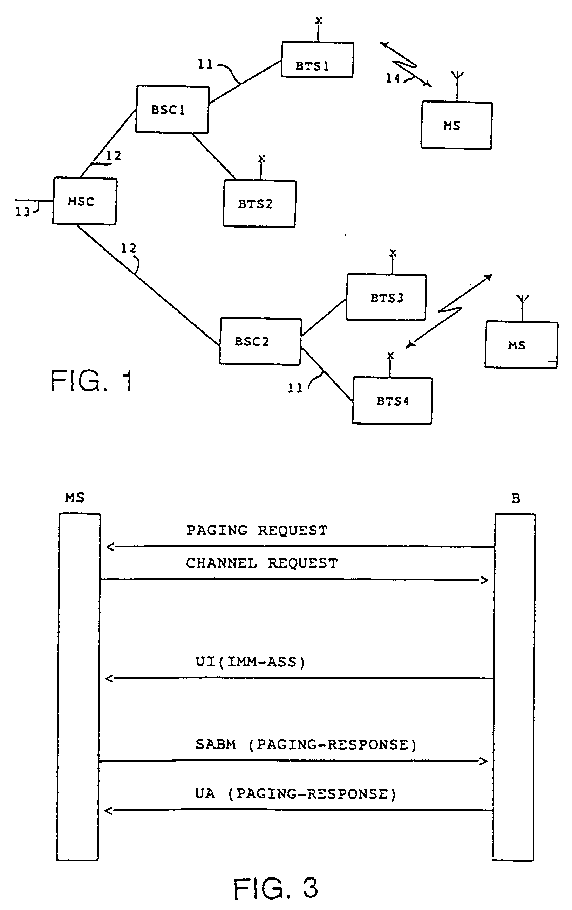

Figure 1 shows schematically a portion of a GSM cellular radio system. In the cellular radio system the area covered by the system is divided into radio cells. Two base station controllers BSC1 and BSC2 are connected by digital transmission links 12 to a mobile exchange MSC. Furthermore, base stations BTS1, BTS2 and BTS3, BTS4 are connected by digital transmission links 11 to the base station controllers BSC1 and BSC2, respectively. Each BSC and the base stations controlled by it form a base station system BSS. The radio coverage area of a single base station BTS typically forms a single radio cell. Each base station BTS1 to BTS4 has a predetermined fixed number of physical radio channels. The configuration and properties of the GSM system are described in greater detail in the GSM specifications. Only a few features essential to the invention will be described below.

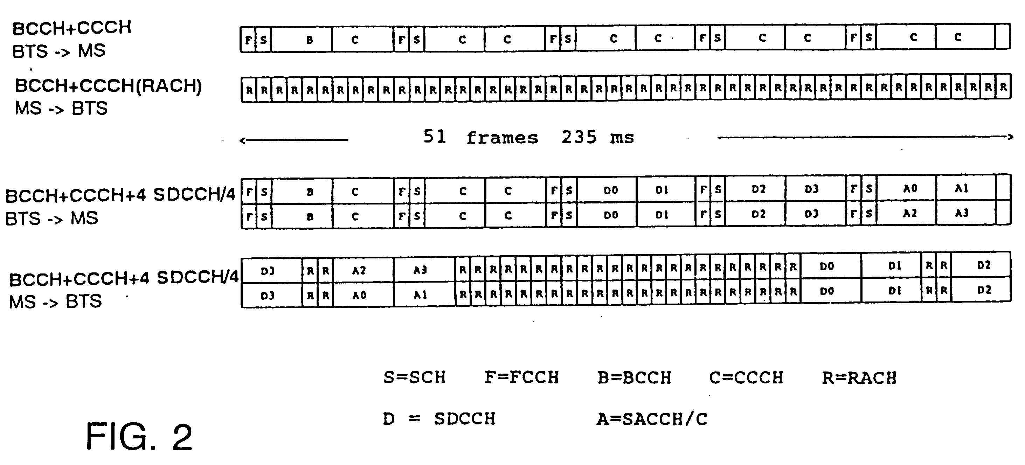

In the TDMA (Time Division Multiple Access) systems a signal (physical channel) consists of TDMA frames each comprising a number of time slots (eight time slots in GSM) in which logical channels are transferred. Logical channels comprise traffic channels for calls to be set up with mobile radio stations MS residing in the cell, and control channels for signalling with mobile radio stations MS residing in the cell. In the GSM system, one superframe comprises 51 or 26 TDMA frames. Figure 2 illustrates different kinds of control channel superframes used over the radio path in the transmission direction (downlink) from the base station BTS to the mobile radio station MS (such as a mobile telephone) and in the reverse direction (uplink) from the mobile radio station MS to the base station BTS.

Logical channels essential for the invention include Common Control Channels CCCH. In the paging, the fixed network pages a mobile station MS in order to alarm the MS to contact the network. To this end, the MSC commands the base station system BSS to send a page on a Paging channel PCH, which is one of the CCCH channels. When the mobile station MS receives a page or wants to initiate a call, it sends a connection request on a Random Access Channel RACH, which is also one of the CCCH channels. In response to the connection request the base station system BSS sends a channel assignment on an Access Grant Channel AGCH.

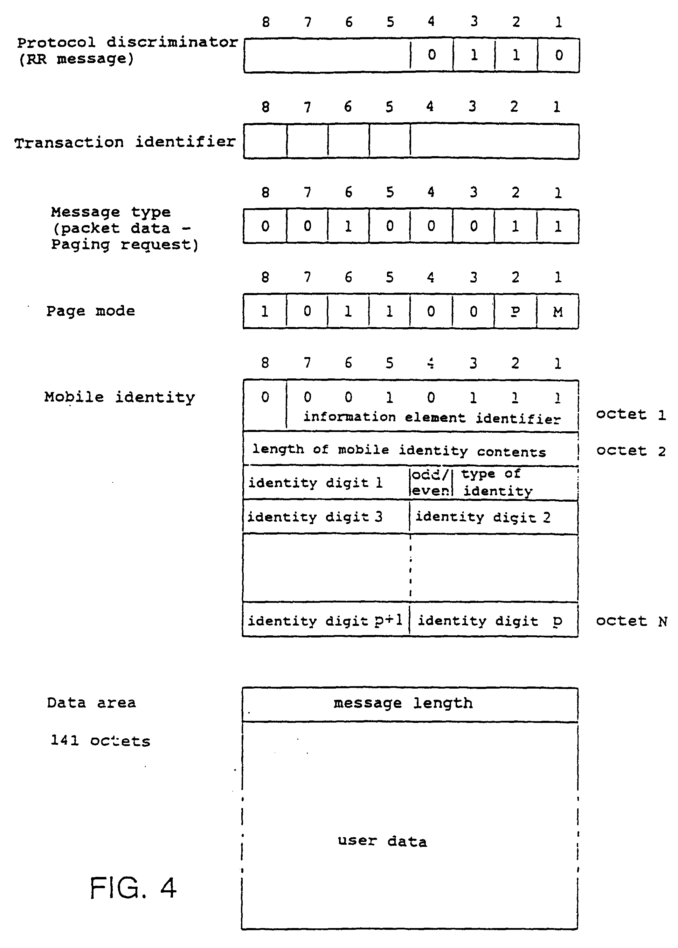

Figure 3 illustrates messages transferred over the radio path when the base station system BSS pages a mobile subscriber station MS. The BSS pages the mobile station MS by sending a Paging Request message on the PCH. On receiving the paging request, the mobile station MS requests a signalling channel by sending a Channel Request message on the RACH. On receiving the Channel Request message, the base station system BSS, which is not aware that the current connection request is associated with the previously transmitted Paging Request message, allocates a signalling channel (SDCCH) for the mobile station MS by sending an Immediate Assignment message on the AGCH. When the SDCCH is allocated to the mobile station MS, the mobile station transmits on this channel a Paging Response message, which is forwarded to a VLR controlling the paging procedure. On the basis of this message the VLR establishes a radio connection and then transfers the call control to the MSC.

From the Channel Request message onward, the connection set-up initiated by the mobile station MS is such as shown, the only difference being that the MS sends a page without the impulse given by the Paging Request message. The BSS is not able to distinguish between Channel Request messages sent for different reasons but always responds to them in the same way.

In the present invention the broadcast nature of the above-described paging messages and the random access nature of the channel request messages are utilized by implementing a packet transfer solution in parallel therewith. The inventive packet transfer does not require any call set-up and is compatible with the original service so that the mobile stations already existing in the cellular system will not be aware of this new facility. In other words, the invention embodies a user data transfer concept in which addressed data can be transferred in a single packet (TDMA time slot) without any related connection establishment. An example of data transfer to a mobile station MS will be given below.

In the data transfer to the mobile station the base station system BSS sends a Packet Data Paging Request message which is a new message reserved for the packet transfer on the PCH. The format of the message is shown in Figure 4. The Packet Data Paging Request message is of the same type as the Paging Request message, from which it differs mainly in two respects:
1) The message type indicates that the message is dedicated to the packet data transfer. This is done by selecting a bit pattern 0010011 dedicated to control messages, but currently unused, to indicate data transfer in the control message.
2) The Packet Data Paging Request message comprises an extra field of 141 octets which is utilized to transfer user data. The first octet indicates the message length.

When the mobile station MS receives a data packet, it acknowledges the successful receipt by sending a Packet Data Channel Request message to the base station BTS on the RACH. This message may be obtained by modifying the normal Channel Request message.

In the same cellular radio system it is also possible to transfer packet data from mobile stations MS to the base station BTS. This is described in the Applicant's FI Patent Applications 923667 (EP-A-0 612 449) and 923668 (EP-A-0 611 508) having the same filing date as the present application and titled *Method for the transfer of user data in packet format in a cellular radio system* and *Method for the transfer of packet data,* respectively.

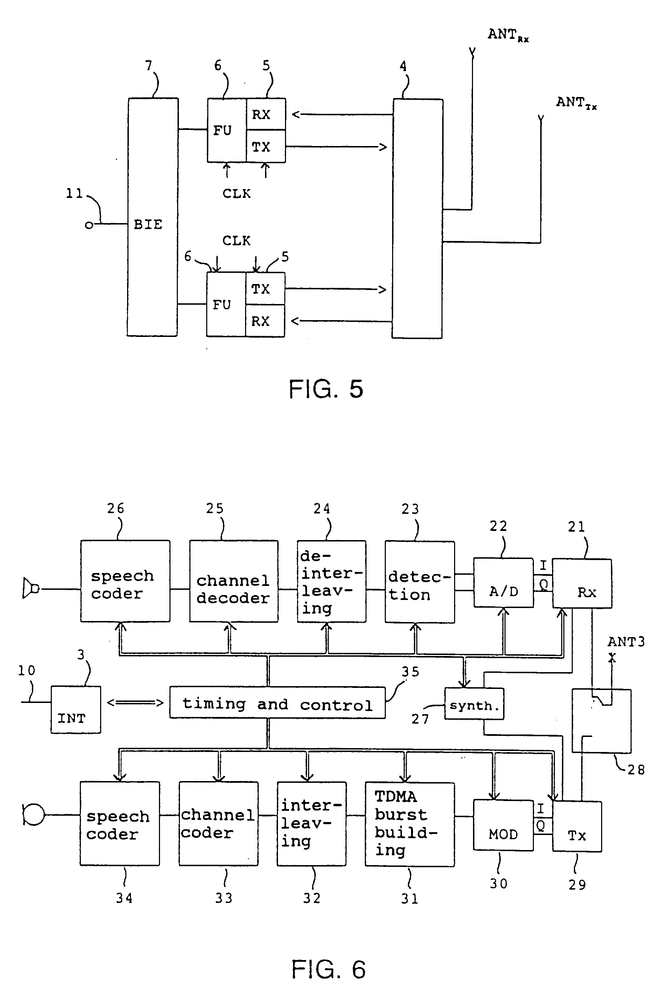

Figure 5 shows a specific base station BTS. The BTS comprises a baseband interface equipment 7 which interfaces the base station to a digital PCM link 11 from the base station controller. Some of the PCM channels of the link 11 are reserved for control channels and some of them for traffic channels. A digital signal received from each one of the PCM channels (speech, data, control messages) is placed in TDMA frames in a frame unit 6, channel-coded, interleaved and transmitted as TDMA bursts and modulated in a transceiver unit 5 to a desired transmission carrier and applied via a transmitter filter 4 to a transmitting antenna ANT_{TX}. Correspondingly, a TDMA signal received at a receiving antenna ANT_{RX} is applied via receiver filters 4 to the transceiver unit 5, where it is modulated from the receiving carrier to the baseband. The signal is then detected, de-interleaved and channel-decoded, and the frames are disassembled in the frame unit 6 and thereafter the received messages are applied via the interface 7 to the PCM link 11. All messages to be sent are assembled in the base station controller BSC and sent via the base station BTS over the radio path. In the same way the base station BTS forwards all messages received from the radio path to the base station controller BSC, where they are disassembled. At simplest, the implementation of the invention requires only the software of the BSC, which, in addition to the normal paging messages, also assembles, disassembles and processes messages used in the transfer of packet data. Inbound and outbound packet data may further be transmitted between the BSC and MSC (and the rest of the network) in suitable messages or on a channel allocated for the purpose. However, this is not essential to the invention and will not be described more closely herein.

Figure 6 shows a mobile radio station MS suitable for use in the invention. The MS comprises an antenna 3, a duplex filter 28, a receiver 21, a transmitter 29 and a synthesizer 27. In the receiving direction, an A/D converter 22, a detector 23, a deinterleaving means 24, a channel decoder 25 and a speech coder 26 and a loudspeaker are connected in series with the receiver 21. In the transmitting direction, a modulator 30, a TDMA burst building means 31, an interleaving means 32, a channel coder 33, a speech coder 34 and a microphone are connected in series in front of the transmitter. The speech coder 34, the microphone, the speech decoder 26 and the loudspeaker are not essential to the invention. All the above-mentioned blocks are controlled by a timing and control unit 35 which processes all outbound and inbound messages. At simplest, the implementation of the invention requires that the unit comprises a software which, in addition to the normal paging messages, also assembles, disassembles and processes messages used in the transfer of packet data. The destination and source of the inbound and outbound packet, respectively, may be e.g. a keyboard, a display or an external data terminal. This, however, is not essential to the invention and will not be described more closely herein.

The figures and the description related to them are only intended to illustrate the present invention. Details of the method according to the invention may vary within the scope of the attached claims.

## Claims

1. Method for the transfer of user data in packet format in a digital cellular radio system comprising base stations (BTS1-BTS4) for radio communication with mobile radio stations (MS), each one of the base stations comprising at least one organization channel (CCCH) shared by all of the mobile radio stations (MS) for sending pages from the base station (BTS) to the mobile stations, for sending connection requests from the mobile stations to the base station, and for sending channel assignments to the mobile stations so as to establish an actual connection on another channel, **characterized** by
generating modified paging messages which will not result in a normal connection establishment;
adding user data in packet format to said modified messages; and
sending said modified messages on the organization channel (CCCH) interleaved with normal paging messages.

2. Method according to claim 1, **characterized** in that the modified paging message comprises a message type identifier different from that of a normal paging message, and a data area added for user data to the end of the normal paging message.

3. Method according to claim 1 or 2, **characterized** in that said at least one organization channel of the base station comprises a first control channel (PCH) for sending pages from the base station to the mobile stations; a second control channel (RACH) for transmitting connection request messages from the mobile stations to the base station; and a third control channel (AGCH) for sending acknowledgement messages from the base station to the mobile radio stations.

4. Method according to claim 3, **characterized** in that the transfer of packet data from the base station to a mobile station comprises
a) sending a packet message containing user data on the first control channel (PCH) to the mobile radio station;
b) sending a response message as an acknowledgement on the second control channel (RACH) to the base station; and
c) repeating steps a) and b) for each data packet to be transferred.

5. Method according to any of claims 1 to 5, **characterized** in that the cellular radio system is a digital GSM mobile radio system; and that the first control channel is a Paging channel (PCH), the second control channel is a Random Access channel (RACH); and the third control channel is an Access Grant channel (AGCH).

6. Method according to any of claims 1 to 5, **characterized** in that the cellular radio system is the digital GSM mobile radio system, and that the modified paging message is formed from the Paging Request message.

7. Mobile station for a digital cellular radio system comprising base stations (BTS1-BTS4) for radio communication with mobile radio stations (MS), each one of the base stations comprising at least one organization channel (CCCH) shared by all of the mobile radio stations for sending pages from the base station to the mobile stations, for sending connection requests from the mobile stations to the base station, and for sending channel assignments to the mobile stations (MS) so as to establish an actual connection on another channel, **characterized** in that the mobile station comprises means (21) for receiving user data in packet format from the base station in modified paging messages which are sent on the organization channel (PCH) interleaved with normal paging messages but will not result in a normal connection establishment.

8. Mobile station according to claim 7, **characterized** in that the modified paging message comprises a message type identifier different from that of a normal paging message, and a data area added for user data to the end of the normal paging message.

## Patentansprüche

1. Verfahren zur Übertragung von Benutzerdaten im Paketformat in einem zellularen Digitalfunksystem mit Basisstationen **(BTS1 bis BTS4)** zur Funkkommunikation mit Mobilfunkstationen **(MS)**, wobei jede der Basisstationen zumindest einen Organisationskanal **(CCCH)** aufweist, der von allen Mobilfunkstationen **(MS)** gemeinsam genutzt wird, zum Senden von Rundrufen von den Basisstationen **(BTS)** zu den Mobilstationen, zum Senden von Verbindungsanforderungen von den Mobilstationen zu der Basisstation, und zum Senden von Kanalzuweisungen zu den Mobilstationen, um eine aktuelle Verbindung auf einem anderen Kanal herzustellen,
**gekennzeichnet durch**
Erzeugen modifizierter Pagingnachrichten, die nicht zu einer normalen Verbindungsherstellung führen;
Addieren von Benutzerdaten im Paketformat zu den modifizierten Nachrichten; und
Senden der modifizierten Nachrichten auf dem Organisationskanal **(CCCH)** verschachtelt mit den normalen Pagingnachrichten.

2. Verfahren nach Anspruch 1,
**dadurch gekennzeichnet, daß**
die modifizierte Pagingnachricht eine von der einer normalen Pagingnachricht abweichende Nachrichtentypidentifizierung aufweist, und einen am Ende der normalen Pagingnachricht hinzugefügten Datenbereich für Benutzerdaten.

3. Verfahren nach Anspruch 1 oder 2,
**dadurch gekennzeichnet, daß**
der zumindest eine Organisationskanal der Basisstation einen ersten Steuerkanal **(PCH)** umfaßt zum Senden von Rundrufen von der Basisstation zu den Mobilstationen; einen zweiten Steuerkanal **(RACH)** zum Übertragen von Verbindungsanforderungsnachrichten von den Mobilstationen zu der Basisstation; und einen dritten Steuerkanal **(AGCH)** zum Senden von Bestätigungsnachrichten von der Basisstation zu den Mobilfunkstationen.

4. Verfahren nach Anspruch 3,
**dadurch gekennzeichnet, daß**
die Übertragung der Paketdaten von der Basisstation zu einer Mobilstation umfaßt:
a) Senden einer Benutzerdaten enthaltenden Paketnachricht auf dem ersten Steuerkanal **(PCH)** zu der Mobilfunkstation;
b) Senden einer Antwortnachricht als Bestätigung auf dem zweiten Steuerkanal **(RACH)** zu der Basisstation; und
c) Wiederholen der Schritte a) und b) für jedes zu übertragende Datenpaket.

5. Verfahren nach einem der Ansprüche 1 bis 5,
**dadurch gekennzeichnet, daß**
das zellulare Funksystem ein digitales GSM-Mobilfunksystem ist; und daß der erste Steuerkanal ein Pagingkanal **(PCH),** der zweite Steuerkanal ein Zufallszugriffskanal (Random Access channel) **(RACH)**; und der dritte Steuerkanal ein Zugriffserteilungskanal (Access Grant channel) **(AGCH)** ist.

6. Verfahren nach einem der Ansprüche 1 bis 5,
**dadurch gekennzeichnet, daß**
das zellulare Funksystem das digitale GSM-Mobilfunksystem ist, und daß die modifizierte Pagingnachricht aus der Paginganforderungsnachricht gebildet wird.

7. Mobilstation für ein zellulares Digitalfunksystem mit Basisstationen **(BTS1 bis BTS4)** zur Funkkommunikation mit Mobilfunkstationen **(MS)**, wobei jede der Basisstationen zumindest einen Organisationskanal **(CCCH)** aufweist, der von allen Mobilfunkstationen gemeinsam genutzt wird, zum Senden von Rundrufen von der Basisstation zu den Mobilstationen, zum Senden von Verbindungsanforderungen von den Mobilstationen zu der Basisstation, und zum Senden von Kanalzuweisungen zu den Mobilstationen **(MS)**, um eine aktuelle Verbindung auf einen anderen Kanal herzustellen,
**dadurch gekennzeichnet, daß**
die Mobilstation eine Einrichtung **(21)** umfaßt zum Empfangen von Benutzerdaten im Paketformat von der Basisstation in modifizierten Pagingnachrichten, die auf dem Organisationskanal **(PCH)** verschachtelt mit normalen Pagingnachrichten gesendet werden, aber nicht zu einer normalen Verbindungsherstellung führen.

8. Mobilstation nach Anspruch 7,
**dadurch gekennzeichnet, daß**
die modifizierte Pagingnachricht eine von der einer normalen Pagingnachricht abweichende Nachrichtentypidentifizierung aufweist, und einen am Ende der normalen Pagingnachricht hinzugefügten Datenbereich für Benutzerdaten.

## Revendications

1. Procédé de transfert de données utilisateur en un format de paquet, dans un système de radiotéléphonie cellulaire numérique comprenant des stations de base (BTS1 - BTS4) pour la radiocommunication avec des stations mobiles de radiocommunication (MS), chacune des stations de base comprenant au moins un canal d'organisation (CCCH) partagé par toutes les stations mobiles de radiocommunication (MS) pour envoyer des appels en diffusion depuis la station de base (BTS) vers les stations mobiles, pour envoyer des demandes de connexion depuis les stations mobiles vers la station de base, et pour envoyer des allocations de canaux aux stations mobiles de façon à établir une connexion réelle sur un autre canal, caractérisé par les étapes consistant à :
générer des messages d'appel en diffusion modifiés qui n'aboutiront pas à un établissement de connexion normal ;
ajouter auxdits messages modifiés des données utilisateur se présentant en un format de paquet ; et
envoyer lesdits messages modifiés sur le canal d'organisation (CCCH), entrelacés avec les messages d'appel en diffusion normaux.

2. Procédé selon la revendication 1, caractérisé en ce que le message d'appel en diffusion modifié comprend un identificateur de type de message différent de celui d'un message d'appel en diffusion normal, ainsi qu'une zone de données, ajoutée pour les données utilisateurs à la fin du message d'appel en diffusion normal.

3. Procédé selon la revendication 1 ou 2, caractérisé en ce que ledit au moins un canal d'organisation de la station de base comprend un premier canal de commande (PCH) destiné à l'envoi des appels en diffusion depuis la station de base vers les stations mobiles ; un deuxième canal de commande (RACH) destiné à la transmission des messages de demande de connexion depuis les stations mobiles vers la station de base ; et un troisième canal de commande (AGCH) destiné à l'envoi des messages d'accusé de réception depuis la station de base vers les stations mobiles de radiocommunication.

4. Procédé selon la revendication 3, caractérisé en ce que le transfert des données par paquets depuis la station de base vers une station mobile comprend les étapes consistant à :
a) envoyer un message en paquets contenant des données utilisateur, sur le premier canal de commande (PCH), vers la station mobile de radiocommunication ;
b) envoyer un message de réponse sous la forme d'un accusé de réception, sur le deuxième canal de commande (RACH), vers la station de base ; et
c) répéter les étapes a) et b) pour chaque paquet de données à transférer.

5. Procédé selon l'une quelconque des revendications 1 à 5, caractérisé en ce que le système de radiotéléphonie cellulaire est un système de radiotéléphonie mobile numérique GSM ; et en ce que le premier canal de commande est un canal d'appel en diffusion (PCH, Paging Channel), le deuxième canal de commande est un canal à accès aléatoire (RACH, Random Access Channel) ; et le troisième canal de commande est un canal à accès dédié (AGCH, Acces Grant Channel).

6. Procédé selon l'une quelconque des revendications 1 à 6, caractérisé en ce que le système de radiotéléphonie cellulaire est un système de radiotéléphonie mobile numérique GSM, et en ce que le message d'appel en diffusion modifié est formé à partir du message de demande d'appel en diffusion.

7. Station mobile pour un système de radiotéléphonie cellulaire comprenant des stations de base (BTS1 - BTS4) pour la radiocommunication avec des stations mobiles de radiocommunication (MS), chacune des stations de base comprenant au moins un canal d'organisation (CCCH) partagé par toutes les stations mobiles de radiocommunication pour envoyer des appels en diffusion depuis la station de base vers les stations mobiles, pour envoyer des demandes de connexion depuis les stations mobiles vers la station de base, et pour envoyer des allocations de canaux aux stations mobiles (MS) de façon à établir une connexion réelle sur un autre canal, caractérisé en ce qu'elle comprend des moyens (21) servant à recevoir les données utilisateur sous un format de paquet provenant de la station de base, dans des messages d'appel en diffusion modifiés qui sont envoyés sur le canal d'organisation (PCH), entrelacés avec des messages d'appel en diffusion normaux, mais n'aboutissant pas à un établissement de connexion normal.

8. Station mobile selon la revendication 7, caractérisé en ce que le message d'appel en diffusion modifié comprend un identificateur de type de message différent de celui d'un message d'appel en diffusion normal, ainsi qu'une zone de données, ajoutée pour les données utilisateurs à la fin du message d'appel en diffusion normal.
